# EUROPEAN PATENT SPECIFICATION

(11) **EP 1 633 176 B1**
(45) Date of publication and mention of the grant of the patent: **25.04.2007**
(21) Application number: 04020960.3
(22) Date of filing: 03.09.2004
(51) Int. Cl.: H05K 5/00, H04M 1/02, G02F 1/13, H04B 1/08, H04B 1/38, G06F 1/16

(54) **Shock resistant mounting for small display screen**
Schockfeste Montagevorrichtung für kleinen Anzeigeschirm
Dispositif de montage antichoc pour un écran d'affichage petit

(43) Date of publication of application: 08.03.2006
(73) Proprietor: Research In Motion Limited, Waterloo, Ontario N2L 3W8 (CA)
(72) Inventor: Chen, Chao, Ontario N2T 2T8 (CA); Phillips, Robert William, Ontario N2L 6M8 (CA); Kyowski, Timothy Herbert, Ontario N3P 1Z8 (CA)
(74) Representative: Asquith, Anthony

(56) References cited:
- EP-A- 1 499 095
- US-A1- 2003 189 681
- US-B1- 6 181 548
- PATENT ABSTRACTS OF JAPAN vol. 1999, no. 12, 29 October 1999 (1999-10-29) & JP 11 202787 A (HITACHI LTD; HITACHI DEVICE ENG CO LTD), 30 July 1999 (1999-07-30)

## Description

This specification relates to such hand-held electronic products as cell-phones, personal digital assistants (PDAs), cameras, etc, which include a display or video screen.
From US-A-2003 0189681 there is known a structure for mounting a flat display module.

One of the encountered difficulties has been that the screen is fragile. Yet hand-held devices are very likely to be dropped, or otherwise abused, occasionally, by the user. Although the user might expect that (repeated) dropping will render the product inoperable, still the prudent manufacturer seeks to make the product as robust as possible. The technology described herein is concerned with improvements in the manner of mounting the screen, with the aim of reducing damage due to impacts.

Providing cushions of foam material (poron) front and back of the screen unit is effective to prevent damage from impacts front and back. But it is when the device is dropped so that the screen is impacted on its edge that a major potential for damage arises. Now, the whole weight of the screen unit may be concentrated perhaps onto one impacting corner. The glass components of the screen unit are polarised, which exacerbates the tendency of microcracks to propagate through the glass.

Another encountered difficulty has been that of accurately positioning the screen during production-line assembly. Screens for hand-held devices are usually mounted in foam, for its shock-absorbing properties, and the screen is glued to the foam. The type of adhesive used is of the stick-on-contact type, whereby the screen must be located to what will be its final position before it touches the adhesive, and it is all too easy for the screen to be slightly misaligned or misplaced. The technology described herein is concerned with the manner in which the screen is located and positioned just prior to contact with the adhesive foam, with the aim of improving accuracy of positioning on a repeatable, production-line basis.

The technology described is aimed at providing a space all around the fragile glass components of the screen unit. It is aimed at bringing the screen unit gently to rest, within that space, when the device is dropped. It is aimed at ensuring that the (glass) components are protected from impacts of sufficient violence to cause damage. And it is aimed at doing these things repeatedly.

Space inside a hand-held electronic device is at a tight premium. It is very demanding to provide sufficient space around the screen unit to enable the screen unit to be brought gently to rest after an impact. If the designer also has to provide an additional margin of tolerance, to cater for the screen unit being inaccurately positioned, misaligned, misplaced etc, within the space, the demands can hardly be met. The technology is aimed at ensuring the screen unit is so accurately placed that the margin for positional tolerance can be reduced or eliminated.

LIST OF DRAWINGS:
Fig 1 is a plan view of a mounted screen assembly;
Fig 2 is a reverse plan view of the mounted screen assembly of Fig 1, in combination with (part of) a hand-held electronic device;
Fig 3 is an exploded view showing the components of the mounted screen assembly of Fig 1, being the mounting frame, the foam buffer, and the screen unit;
Fig 4 is an exploded view showing the components of the screen unit of Fig 3, being the screen stack, the plastic shell, and the backing plate;
Fig 5a is a diagrammatic plan view of a mounted screen assembly similar to that shown in Fig 1;
Fig 5b is similar to Fig 5a, showing another mounted screen assembly;
Fig 5c is similar to Fig 5a, showing a further mounted screen assembly;
Fig 6 is a cross-section on line 6 of Fig 4 of the screen unit;
Fig 7 is a cross-section on line 7 of Fig 4 of the screen unit;
Fig 8 is a cross-section on line 8 of Fig 4 of the screen unit, showing the screen unit in position just prior to its final assembly into the mounting frame;
Fig 9 is similar to Fig 8, but shows the screen unit finally assembled into the mounting frame, forming the mounted screen assembly;
Fig 10 is the same view as Fig 9, but includes components of the electronic device;
Fig 11 is similar to Fig 9, but shows the screen unit moved hard over to the left, within the mounting frame.

The apparatuses shown in the accompanying drawings and described below are examples. The scope of the patent protection sought is defined by the accompanying claims, and not necessarily by specific features of exemplary embodiments.

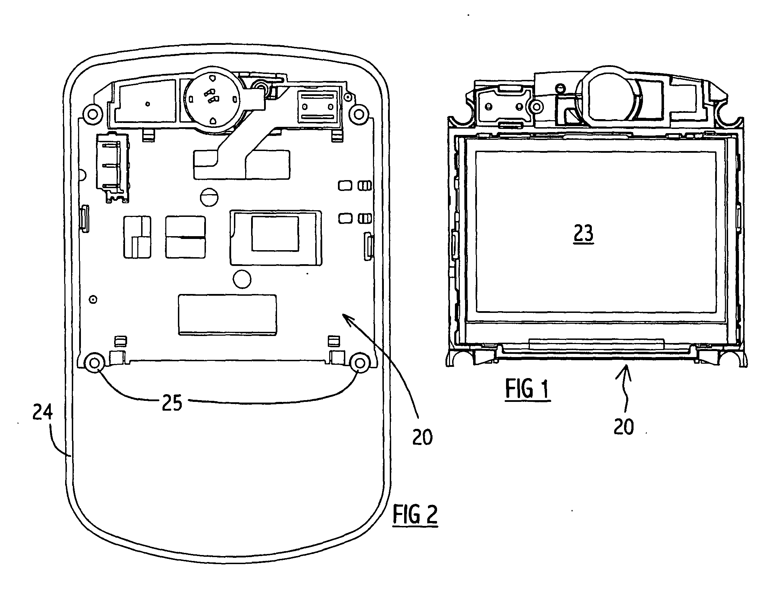

The apparatus shown in Fig 1 is a mounted screen assembly 20, having a display screen 23. Fig 2 shows the (back of the) mounted screen assembly 20, assembled into the casing 24 of a PDA, and secured rigidly to the casing by means of four bolt-down fittings 25.

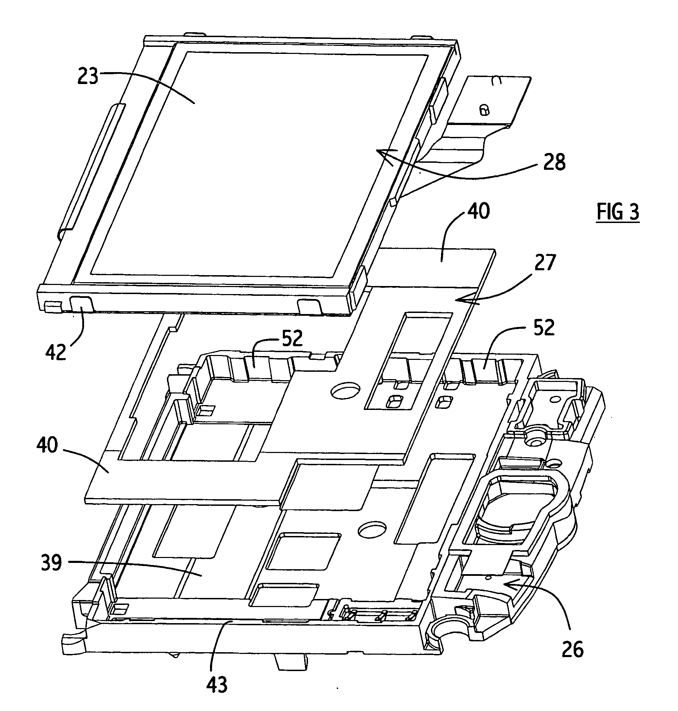

Fig 3 shows the components of the mounted screen assembly 20. These are (a) a mounting frame 26, comprising a plastic moulding; (b) a foam buffer 27, comprising a punched-out sheet of plastic resilient porous foam; and (c) the screen unit 28.

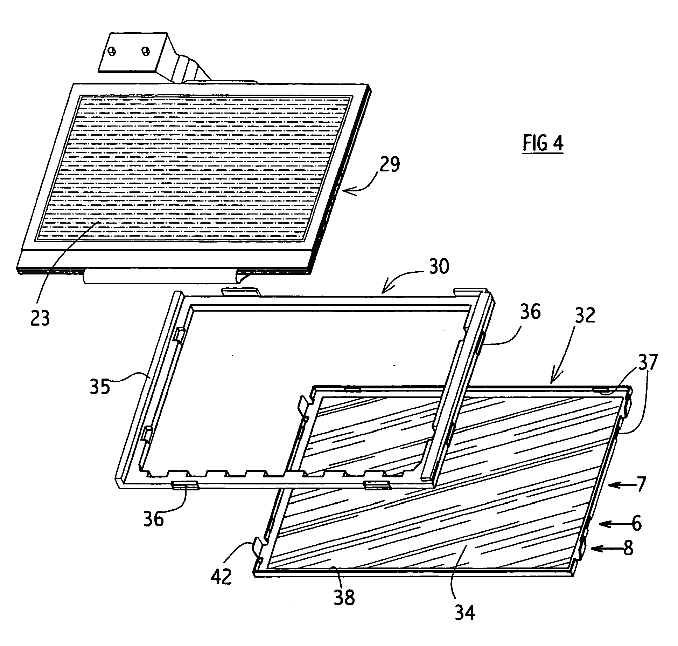

Fig 4 shows some of the components of the screen unit 28. These are (a) the display stack 29, which comprises a stack of layers, the topmost of which is the display screen 23 itself; (b) a shell 30, comprising a plastic moulding; and (c) a backing plate 32. The backing plate 32 is bent and folded from a sheet of stainless steel, and incorporates a polished reflector surface 34.

The several layers that make up the display stack 29 are a tight fit between the ledged sides 35 of the moulded shell 30. The metal backing plate 32 is crimped to the shell 30, whereby, together, the stack 29, the shell 30, and the backing plate 32 constitute the integrated screen unit 28, being the structure that is to be protected from impacts.

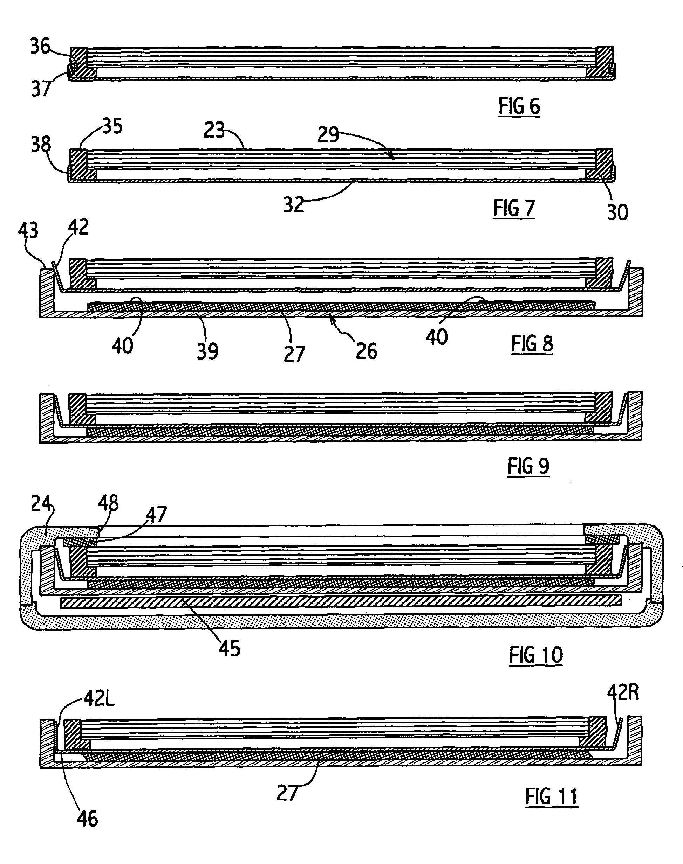

The crimping involves the provision of shaped recesses 36 in the plastic shell 30, and the provision of tags [32] 37 in the upstanding metal rim 38 of the backing plate 32. Fig 6 shows a cross-section of the screen unit in the area of the crimps, and Fig 7 is a cross-section away from the crimps.

The crimped screen unit 28 can now be assembled, as a rigid unified single component, into the mounting frame 26. The underside of the foam sheet 27 is pre-glued on top of the baseplate 39 of the mounting frame 26. The foam sheet 27 is provided, on its upper side, with stripes 40 of adhesive. The adhesive in the stripes 40 is protected by covering strips (not shown), the strips being peeled off just prior to the backing plate 32 being lowered down into touching contact with the adhesive.

The manner of assembly is shown in Figs 8 and 9. In Fig 8, the springy tabs 42 protruding from the backing plate 32 of the screen unit 28 engage with, and rest on, the lips 43 of the plastic mounting frame 26, whereby the screen unit 28 is held slightly separated from, and just clear of, the (exposed) adhesive stripes 40. Fig 9 shows the screen unit 28 having been pressed down until the underside of the backing plate 32 contacts the stripes 40. After that, the screen unit 28 remains firmly adhered to the mounting frame 26.

The now-completed mounted screen assembly 20 can now be bolted into the casing 24, as described. Fig 10 shows some of the other components of the device, in side cross-section. The circuit board 45 and other components are housed inside the casing.

The manner in which the screen unit 28 is fixed into the casing of the PDA may be contrasted with the manner in which that task has been done in the conventional designs. The differences attributable to the provision and function of the springy tabs 42 will now be described.

One of the problems with a hand-held electronic device is that such devices are prone to being dropped. In fact, manufacturers have a program of drop tests; typically, the devices are classed as being robust enough and sturdy enough if, in e.g eighty percent of the devices, when the devices are dropped from a height of so many feet onto a concrete floor, the screen remains intact and functioning. The drop test may specify that the device be dropped so that it lands on one corner, and/or lands flat-on, etc.

The conventional designs have tended to perform only modestly in these drop tests. Of course, it is always possible to protect the screen more effectively from such abuse -- but not, hitherto, without substantial compromises and penalties by way of extra cost, extra weight, and extra occupied space -- the latter being perhaps the most acute.

It should be noted that the trend, in PDA and cell phone design, has been to add more and more features of performance, increasing the demand for premium space inside the casing, and yet at the same time the designer is pressured to reduce the overall size of the product. In some respects, continuing engineering improvement has meant that components do improve in terms of the compromise between cost, size, weight, robustness, etc, and performance features. However, the pressure in the direction of improving resolution, increasing screen size, colour, brightness, etc, tends to render the latest screens, if anything, less rather than more robust.

One of the difficulties is that the display screen includes polarised glass, which is inherently more prone to the propagation of micro-cracks than is ordinary glass, and therefore inherently less able to stand up to drop tests.

The springy tabs 42 assist in protecting the fragile screen unit 28 from the violence of the drop test. Fig 11 shows the effect on the screen unit of the device striking a hard object to the left side. By its inertia, the screen unit 28 surges leftwards, within the mounting frame 26. The foam material 27 deflects in a shear mode, as shown. The left side springy tab 42L becomes compressed while the right side springy tab 42R relaxes. These strains -- in the springy tabs and in the foam -- absorb the energy of the impact, allowing the screen unit to come gently to rest, under controlled deceleration, before the screen unit can impact against anything hard and rigid.

It may be noted that, even if the impact should carry the screen unit 28 even further to the left than is shown in Fig 11, the springy tab 42L can deflect a little further (although now with an increased spring-rate), in that the root area 46 of the backing plate 32, at the base of the springy tab 42L, can undergo (slight) twisting and curling, without the backing plate (or anything else) taking a permanent set. Thus, even after an impact that takes the screen unit 28 even further to the left than is shown in Fig 11, with the resulting further distortions of the backing plate itself, immediately after the impact the backing plate and the other components revert to their Fig 9 / Fig 10 positions.

The springy tabs should not be so stiff, of course, that the impact of the tabs themselves puts such a large deceleration into the screen unit as to damage it. Equally, the springy tabs should not be so flimsy that they do not properly inhibit the screen unit from impacting into the mounting frame.

It is suggested that the impact absorbing function is adequate when the permitted travel of the screen unit, between the Fig 9 position and the Fig 11 position, is at least about one-quarter-millimetre, and preferably a half-millimetre or more. At least from the standpoint of impact absorption, the larger the permitted deflection of the springy tab, the better.

Preferably also, the spring-rate of the springy tab should be such that the force required to cause the screen unit to move to the Fig 11 position is about twenty thirty times the weight of the screen unit. It is suggested that the springy tab would be too stiff if it took more than about thirty forty-five times the weight of the screen unit to move the screen unit to Fig 11, and that the springy tab would be too flimsy if it took less than about ten fifteen times the weight of the screen unit to move the screen unit to Fig 11.

As to dimensions, good results (that is to say, a significant reduction in the number of failures in drop tests) have been obtained, with a screen unit weighing twenty-five grams, when the stainless steel backing plate 32 (and therefore the tab 42) has a thickness of 0.38 0.2 mm, and where two tab elements per side have a length (height) of 3.5 mm, and each a width of 3.5 mm. (Thus, a single springy tab having the same impact-cushioning effect as those two tab elements would have a width of seven mm.) It is suggested that the acceptable limits of spring rate of the springy tabs may be set at between one half and double the spring rate of tabs having these dimensions.

It has been mentioned above that the springy tabs 42 enable the screen unit 28 to be positioned accurately, with respect to the mounting frame 26, just before the screen unit 28 is pressed down into final contact with the adhesive stripes 40. Further consideration will now be addressed to this point.

In the conventional designs, it has been quite difficult to position the screen unit accurately within the mounting frame, on a production-line basis. Especially when the screen unit is assembled automatically, there is little opportunity for the screen unit to be unglued and repositioned, if it is misaligned. The misalignment would not be picked up until final (human) inspection. It may be noted that even the smallest angular misalignment can hardly be permitted. If the screen is even slightly perceptibly misaligned or crooked, relative to the casing aperture, even though such misalignment would have no effect on useability, still a user would usually interpret the misalignment as irritating evidence of general low quality in the product.

Similarly, when the screen unit is assembled manually into the mounting frame, while it is possible that the operator might make an attempt to re-position a misaligned screen unit, in practice that cannot be relied on. For manual assembly, the designer would provide a support edge or the like against which the operator can rest the screen unit, just prior to lowering the unit carefully down onto the adhesive. However, providing a support edge, e.g on a production jig, is not preferred.

Thus, however the assembly was done, it was difficult to ensure that the screen unit was positioned properly, repeatedly, on the production line. By contrast, as described herein the screen unit 28 lies perfectly positioned, but clear of the adhesive 40, as in Fig 8, just before the screen unit is pressed against the adhesive. The production line operative can achieve hitherto unachievable accuracy, repeatable, with very little care, attention, or skill.

Not only should the screen unit be free of any degree of angular misalignment, the screen unit also should not be misplaced laterally, i.e more to the left than to the right. The Fig 8 / Fig 9 assembly manner ensures that both angular misalignments and translational misplacements are reduced to an imperceptible minimum.

It is stressed that this degree of repeatable accurate positioning does not require placing the screen unit against some solid abutment, as a positioning datum -- which might leave the screen unit vulnerable to impacts against that solid abutment. After assembly, the screen unit 28 is able to move in all modes and directions in response to impacts, and to be decelerated in all those modes by the springy tabs, and by being surrounded by foam. The key direction in which impacts do the most damage is when the direction of the impact lies in the plane of the screen 23, and that is when the springy tabs 42 function most effectively.

A front layer 47 of foam is glued to the casing 24, and surrounds the aperture 48 in the casing 24. This foam may or may not be adhesively secured to the margins of the screen unit. It may happen that, for service purposes, it is desired to change e.g the screen unit 28. In that case, the adhesive 40 on the foam that secures the screen unit to the foam should be of the kind that permits separation. The adhesive that secures the foam to the casing should be of the more permanent type.

Mounted as shown, the screen unit 28 is very well protected against impacts. It has often been the case conventionally that a glass cover or lens was placed over the actual display screen, for physical protection. The designer could arrange that it was the glass lens, and not the glass components of the screen unit, that struck the casing during an impact, and this arrangement did provide effective mechanical protection.

The disadvantages with the use of a lens, apart from extra space, weight, and cost, are that the lens interferes with light transmissibility, which can be critical especially when the screen is in reflective, rather than back-lit, mode. Battery life is critical in PDAs, whereby the designer arranges to maximise the time spent in reflective mode, whereby the time spent in back-lit mode is minimised. The provision of the springy tabs is useful in enabling the mounted screen unit to be properly resistant to impact damage, without the need to resort to a covering lens.
It should be understood that it is the combination of the springy tabs with the foam cushions that is effective to protect the screen unit from impacts. It is not suggested that the springy tabs would be sufficient, on their own (i.e without the foam cushions), in most cases, to properly protect the screen unit. In the type of edge-impact as illustrated in Fig 11, the foam material (and the adhesive) is stressed in shear, and thus the foam absorbs a good fraction of the impact energy. Similarly, just the foam on its own gives barely adequate protection, as experience has shown.
On the other hand, it can be worth including the springy tabs even in a case where the extra impact resistance is really not required. That is to say, the other function of the springy tabs can be important, in that the springy tabs assist in locating the screen unit in exactly the right position just prior to pressing the screen unit down onto the adhesive. This function would be useful even if the screen unit were glued directly to the casing, rather than to the foam cushion -- although, of course, screen units are almost invariably mounted in foam cushions.

The expression "springy tab" as used herein refers to the whole springy tab that is present along one side of the screen unit. In a case where two springy tab elements are provided on the same side, e.g two on the left side of the screen, and those two elements are stressed in the same sense by an impact, those two tab elements would be regarded as sub-components of one single springy tab on the left side. As shown in Fig 5a, the screen unit has been provided with eight springy tab elements, two each side; elements 49T on the top, 49B on the bottom, 49L on the left, and elements 49R on the right.

It is not necessary to provide eight tab elements in every case, however. As shown in Fig 5b, only four tab elements are provided, two 50L to the left and two 50R to the right sides, and none to the top and bottom sides. (Fig 5b corresponds to the components shown in Fig 4 in this respect.) Now, in order to hold the screen unit restrained against top/bottom impacts, the left and right tab elements should be tight laterally, i.e tight in the top/bottom direction, in their sockets 52 in the mounting frame. It has been found that the springy tabs, when tight in their sockets, have a more or less similar resilience in the top/bottom direction as they have in the left/right direction. It is not necessary that all four tab elements be a tight fit in their respective sockets.

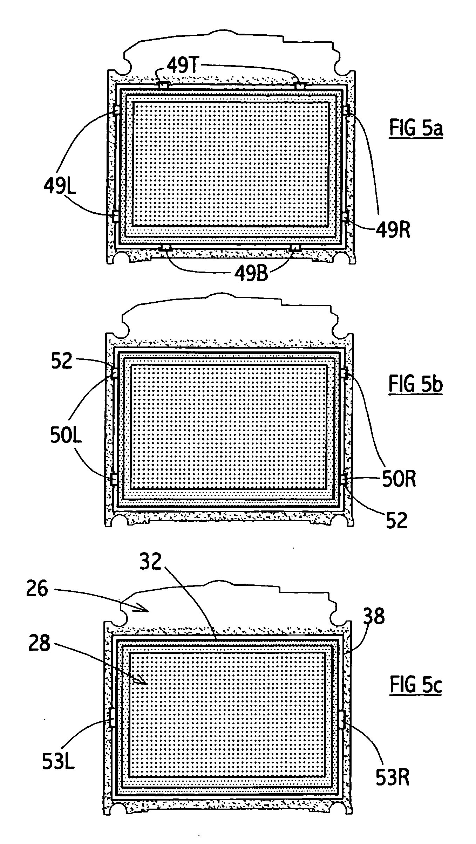

In Fig 5c, the number of springy tabs 53L,53R has been reduced to two. This of course is the minimum. Four is preferred (Fig 5b), as giving a rather greater degree of resistance to the type of impact that causes the screen unit to rotate in the plane of Fig 5b. Sometimes the designer has less space in which to place the springy tabs on the top and bottom edges rather than on the left and right edges, because of the other components (e.g wiring ribbons, etc) associated with the top and bottom, whereby the Fig 5b arrangement again is preferred.

## Claims

1. A display screen unit for a hand-held electronic device, wherein:
[2] the screen unit (29) comprises a stack of layers;
[3] an uppermost one of the layers comprises a generally flat display screen (23), which, in plan view of the unit, has an outer periphery;
[4] another one of the layers in the stack is a metal backing plate (32);
[5] the metal backing plate is mainly flat, and defines a flat plane of the backing plate;
[6] the display screen is carried rigidly in the metal backing plate (32);
[7] the metal backing plate includes a number N of springy tabs (42), where N is at least two, and in respect of each springy tab:-
[8] - the springy tab comprises a fold of the metal of the backing plate, in which the metal is bent out of the flat plane of the backing plate.
[9] - in plan view, the springy tab (42) protrudes outwards from the outer periphery of the display screen;
[10] - the unit is so configured that the springy tab is able to undergo resilient deflection in direction D, being a direction that lies parallel to the plane of the backing plate and is directed inwards with respect to the periphery of the display screen.

2. Unit of claim 1, wherein, in respect of each springy tab (42), the springy tab has a spring rate such that the tab deflects in the direction D through the distance Tmax, when the deflecting force is not less than ten fifteen times, and not more than thirty forty-five times, the weight of the screen unit.

3. Unit of claim 1, wherein, in respect of each springy tab, the springy tab is bent upwards from the flat plane of the backing plate.

4. Unit of claim 1, wherein the periphery of the screen unit has two opposed sides, and the tabs are arranged one on each of the opposed sides.

5. Unit of claim 1, wherein:
[2] the screen unit in plan view forms a rectangle; and
[3] the springy tab is itself flat, being formed as a simple single fold, protruding from one side of the rectangle, and the fold lies parallel to that one side.

6. Unit of claim 1, wherein:
[2] the screen unit includes a plastic shell;
[3] the mainly flat metal backing plate has an upturned rim; and
[4] tags in the rim are crimped into corresponding recesses in the plastic shell, whereby the backing plate is secured rigidly to the shell.

7. A mounted screen assembly, being a combination of a screen unit as claimed in claim 1, and a mounting frame (26), wherein :
[2] the assembly is physically suitable for inclusion in a hand-held electronic device;
[3] the movement of the screen unit in the direction D is movement of the screen unit relative to the mounting frame;
[4] the mounting frame includes a plastic moulding (39), having a rim (43);
[5] the screen unit lies assembled into the mounting frame, and the rim at least partially surrounds the periphery of the screen unit;
[6] the rim has an inwards-facing abutment surface; and
[7] the configuration of the combination is such that the N tabs protruding from the periphery of the unit touch the inwards-facing abutment surface, upon the combination being subjected to an impact in the direction D, thereby inhibiting the screen unit itself from touching the mounting frame.

8. Assembly of claim 7, wherein, in respect of each springy tab, the assembly is so configured that the springy tab is able to undergo resilient deflection totalling Tmax in direction D, relative to the mounting frame, where Tmax is at least one quarter millimetre, and preferably is at least a half-millimetre.

9. Assembly of claim 7, wherein:
[2] the screen unit in plan view forms a rectangle, and
[3] at least one of the springy tabs comprises two or more separate tab elements, located both or all on a common side of the rectangle.

10. Assembly of claim 9, wherein:
[2] the tab elements are rectangular in cross-section, the thickness thereof being equal to the thickness T of the backing plate, the tab element having a height overall of H mm, and a width of W mm;
[3] where T = 0.2mm, H = 3.5mm, and W = 3.5mm.

11. Assembly of claim 7, wherein the assembly includes an impact absorber, comprising a layer of resilient foam material, lying between the screen unit and the mounting frame.

12. Assembly of claim 11, wherein the layer of foam material is secured by adhesive to the mounting frame, and by adhesive to the screen unit.

13. Assembly of claim 11, wherein the rim of the mounting frame and the springy tabs are so configured with respect to each other that;
[2] (a) prior to the screen unit being secured to the mounting frame:-
[3] - the screen unit can be placed with the springy tabs thereof resting on the rim of the mounting frame;
[4] - with the screen unit thereby prevented from making contact with the securing adhesive by which the screen unit is secured to the mounting frame; and
[5] (b) the screen unit can thereupon be pressed into contact with the securing adhesive.

14. Assembly of claim 7, wherein, in respect of at least one of the springy tabs, the rim of the mounting frame includes a socket, which is of such width as to be a tight fit on the width of the tab.

15. Assembly of claim 7, wherein the mounting frame lies secured rigidly into a casing of a hand-held electronic device.

## Patentansprüche

1. Eine Anzeigebildschirmeinheit für eine tragbare elektronische Vorrichtung, wobei:
[2] die Bildschirmeinheit (29) eine Folge an Schichten umfasst;
[3] die oberste der Schichten einen im Allgemeinen flachen Bildschirm (23) umfasst, der in Draufsicht auf die Einheit eine äußeren Umfang aufweist;
[4] es sich bei einer weiteren der Schichten aus der Folge an Schichten um eine metallische Stützplatte (32) handelt;
[5] die metallische Stützplatte größtenteils flach ist und eine flache Ebene der Stützplatte definiert;
[6] der Anzeigebildschirm starrr in der metallischen Stützplatte (32) gehalten wird;
[7] die metallische Stützplatte eine Anzahl N an federnden Aufhängern (42) einschließt, wobei N mindestens zwei ist und mit Bezug auf jeden federnden Aufhänger:-
[8] - der federnde Aufhänger eine Lasche aus dem Metalls der Stützplatte umfasst, wobei das Metall aus der flachen Ebene der Stützplatte ausgebogen wird;
[9] - der federnde Aufhänger (42) in Draufsicht von dem äußeren Umfang des Anzeigebildschirms nach außen ragt;
[10] - die Einheit so konfiguriert ist, dass der federnde Aufhänger elastischer Durchbiegung in Richtung D ausgesetzt werden kann, wobei Richtung D eine Richtung ist, die parallel zu der Ebene der Stützplatte liegt und mit Bezug auf den Umfang des Anzeigebildschirmes nach innen gerichtet ist.

2. Einheit gemäß Anspruch 1, wobei in Bezug auf jeden federnden Aufhänger (42) der federnde Aufhänger eine solche Federkonstante aufweist, dass der Aufhänger in der Richtung D über die Distanz Tmax durchbiegt, wenn die Ablenkkraft nicht weniger als zehn fünfzehn Mal und nicht mehr als dreißig fünfundvierzig Mal das Gewicht der Bildschirmeinheit beträgt.

3. Einheit gemäß Anspruch 1, wobei in Bezug auf jeden federnden Aufhänger der federnde Aufhänger von der ebenen Fläche der Stützplatte aufwärts gebogen ist.

4. Einheit gemäß Anspruch 1, wobei der Umfang der Bildschirmeinheit zwei gegenüberliegende Seiten aufweist und jeweils einer der Aufhänger auf einer der gegenüberliegenden Seiten angebracht ist.

5. Einheit gemäß Anspruch 1, wobei:
[2] die Bildschirmeinheit in Draufsicht ein Rechteck bildet; und
[3] der federnde Aufhänger selbst flach ist und als eine einfache, einzelne Lasche gebildet wird, die von einer Seite des Rechtecks hinausragt und die Lasche parallel zu dieser einen Seite liegt.

6. Einheit gemäß Anspruch 1, wobei:
[2] die Bildschirmeinheit ein Plastikgehäuse einschließt;
[3] die größtenteils flache, metallische Stützplatte einen nach oben gerichteten Rand aufweist; und
[4] Anhänger in dem Rand in die entsprechenden Vertiefungen in dem Plastikgehäuse gecrimpt werden, wodurch die Stützplatte starr an dem Gehäuse befestigt wird.

7. Eine eingebaute Bildschirmanordnung, die eine Kombination aus einer Bildschirmeinheit wie in Anspruch 1 beansprucht und einem Einbaurahmen (26) darstellt, wobei:
[2] die Anordnung physikalisch für das Einfügen in eine tragbare elektronische Vorrichtung geeignet ist;
[3] die Bewegung der Bildschirmeinheit in Richtung D eine Bewegung der Bildschirmeinheit relativ zu dem Einbaurahmen ist;
[4] der Einbaurahmen eine Plastikausformung (39) mit einem Rand (43) einschließt;
[5] die Bildschirmeinheit in montiertem Zustand in dem Einbaurahmen liegt und der Rand zumindest teilweise den Umfang der Bildschirmeinheit umgibt;
[6] der Rand eine nach innen gerichtete Anlagefläche aufweist; und
[7] die Konfiguration der Kombination dergestalt ist, dass die N Aufhänger, die vom Umfang der Einheit herausragen, die nach innen gerichtete Anlagefläche berühren, wenn die Kombination einem Stoß in der Richtung D ausgesetzt wird, wodurch verhindert wird, dass die Bildschirmeinheit selbst den Einbaurahmen berührt.

8. Anordnung gemäß Anspruch 7, wobei in Bezug auf jeden federnden Aufhänger die Anordnung so konfiguriert ist, dass der federnde Aufhänger einer elastischen Durchbiegung ausgesetzt werden kann, wobei Tmax in Richtung D summiert wird, relativ zu dem Einbaurahmen, wobei Tmax zumindest einen Viertel Millimeter und bevorzugt zumindest einen halben Millimeter beträgt.

9. Anordnung gemäß Anspruch 7, wobei:
[2] die Bildschirmeinheit in Draufsicht ein Rechteck bildet; und
[3] zumindest einer der federnden Aufhänger zwei oder mehr separate Aufhängerelemente umfasst, die beide oder alle auf einer gemeinsamen Seite des Rechteckes angeordnet sind.

10. Anordnung gemäß Anspruch 9, wobei:
[2] die Aufhängerelemente im Querschnitt rechteckig sind, wobei die Dicke derselben der Dicke T der Stützplatte entspricht und das Aufhängerelement eine Gesamthöhe von H mm und eine Breite von W mm aufweist.
[3] wobei T gleich 0,2 mm, H gleich 3,5 mm und W gleich 3,5 mm ist.

11. Anordnung gemäß Anspruch 7, wobei die Anordnung einen Stoßdämper einschließt, der eine Schicht aus elastischem Schaumstoff umfasst, die zwischen der Bildschirmeinheit und dem Einbaurahmen liegt.

12. Anordnung gemäß Anspruch 11, wobei die Schaumstoffschicht mit Haftmittel an dem Einbaurahmen und mit Haftmittel an der Bildschirmeinheit befestigt ist.

13. Anordnung gemäß Anspruch 11, wobei der Rand des Einbaurahmens und die federnden Aufhänger in Bezug aufeinander so konfiguriert sind, dass;
[2] (a) vor der Befestigung der Bildschirmeinheit an dem Einbaurahmen:-
[3] - die Bildschirmeinheit so platziert werden kann, dass die federnden Aufhängern derselben auf dem Einbaurahmen aufliegen;
[4] - wodurch der Kontakt der Bildschirmeinheit mit dem befestigenden Haftmittel, mit dem die Bildschirmeinheit an dem Einbaurahmen befestigt ist, vermieden wird; und
[5] (b) die Bildschirmeinheit durch Aufpressen in Kontakt mir dem befestigenden Haftmittel gebracht werden kann.

14. Anordnung gemäß Anspruch 7, wobei in Bezug auf zumindest einen der federnden Aufhänger der Rand des Einbaurahmens eine Hülse einschließt, die so breit ist, dass sie in Presspassung mit der Breite des Aufhängers ist.

15. Anordnung gemäß Anspruch 7, wobei der Einbaurahmen starr in einem Gehäuse einer tragbaren elektronischen Vorrichtung befestigt ist.

## Revendications

1. Unité d'écran d'affichage pour un dispositif électronique portatif, dans laquelle :
[2] l'unité d'écran (29) comprend un empilement de couches ;
[3] une des couches les plus élevées comprend un écran d'affichage (23) généralement plat, qui, dans une vue en plan de l'unité, a une périphérie externe ;
[4] une autre des couches dans l'empilement est une plaque de renfort métallique (32) ;
[5] la plaque de renfort métallique est essentiellement plate, et définit un plan plat de la plaque de renfort ;
[6] l'écran d'affichage est porté de façon rigide dans la plaque de renfort métallique (32) ;
[7] la plaque de renfort métallique comprend un nombre N de languettes résilientes (42), où N est au moins deux, et en ce qui concerne chaque languette résiliente :
[8] - la languette résiliente comprend un repli du métal de la plaque de renfort, le métal étant plié à l'extérieur du plan plat de la plaque de renfort ;
[9] - dans une vue en plan, la languette résiliente (42) fait saillie vers l'extérieur à partir de la périphérie externe de l'écran d'affichage ;
[10] - l'unité est configurée de telle sorte que la languette résiliente est apte à subir une déflexion résiliente dans la direction D, qui est une direction qui est parallèle au plan de la plaque de renfort et est dirigée vers l'intérieur par rapport à la périphérie de l'écran d'affichage.

2. Unité selon la revendication 1, dans laquelle, en ce qui concerne chaque languette résiliente (42), la languette résiliente a une raideur de ressort telle que la languette défléchie dans la direction D de la distance Tmax lorsque la force de déflexion n'est pas moins de dix à quinze fois, et pas plus de trente à quarante-cinq fois, le poids de l'unité d'écran.

3. Unité selon la revendication 1, dans laquelle, en ce qui concerne chaque languette résiliente, la languette résiliente est courbée vers le haut à partir du plan plat de la plaque de renfort.

4. Unité selon la revendication 1, dans laquelle la périphérie de l'unité d'écran a deux côtés opposés, et les languettes sont disposées l'une sur chacun des côtés opposés.

5. Unité selon la revendication 1, dans laquelle
[2] l'unité d'écran dans une vue en plan forme un rectangle ; et
[3] la languette résiliente est elle-même plate, étant formée comme un simple repli unique, faisant saillie à partir d'un côté du rectangle, et le repli est parallèle à ce côté.

6. Unité selon la revendication 1, dans laquelle
[2] l'unité d'écran comprend une coque en matière plastique ;
[3] la plaque de renfort métallique essentiellement plate a un rebord tourné vers le haut; et
[4] des étiquettes dans le rebord sont serties dans des cavités correspondantes dans la coque en matière plastique, ce par quoi la plaque de renfort est fixée de façon rigide à la coque.

7. Ensemble d'écran monté, qui est une combinaison d'une unité d'écran selon la revendication 1 et d'un cadre de montage (26), dans lequel:
[2] l'ensemble est physiquement approprié pour une inclusion dans un dispositif électronique portatif ;
[3] le mouvement de l'unité d'écran dans la direction D est un mouvement de l'unité d'écran par rapport au cadre de montage ;
[4] le cadre de montage comprend un moulage (39) en matière plastique, ayant un rebord (43) ;
[5] l'unité d'écran repose assemblée dans le cadre de montage, et le rebord entoure au moins partiellement la périphérie de l'unité d'écran ;
[6] le rebord a une surface de butée dirigée vers l'intérieur; et
[7] la configuration de la combinaison est telle que les N languettes faisant saillie à partir de la périphérie de l'unité entrent en contact avec la surface de butée dirigée vers l'intérieur lorsque la combinaison est soumise à un impact dans la direction D, empêchant de cette façon l'unité d'écran elle-même d'entrer en contact avec le cadre de montage.

8. Ensemble selon la revendication 7, dans lequel, en ce qui concerne chaque languette résiliente, l'ensemble est configuré de telle sorte que la languette résiliente est apte à subir une déflexion résiliente s'élevant à Tmax dans la direction D, par rapport au cadre de montage, où Tmax est d'au moins un quart de millimètre et est, de préférence, d'au moins un demi millimètre.

9. Ensemble selon la revendication 7, dans lequel
[2] l'unité d'écran dans une vue en plan forme un rectangle, et
[3] au moins l'une des languettes résiliente comprend deux éléments de languette séparés ou davantage, situés tous deux ou tous sur un côté commun du rectangle.

10. Ensemble selon la revendication 9, dans lequel :
[2] les éléments de languette sont rectangulaires en coupe, l'épaisseur de ceux-ci étant égale à l'épaisseur T de la plaque de renfort, l'élément de languette ayant une hauteur globale de H mm et une largeur de W mm;
[3] où T = 0,2 mm, H = 3,5 mm et W = 3,5 mm.

11. Ensemble selon la revendication 7, dans lequel l'ensemble comprend un amortisseur d'impacts, comprenant une couche de matériau en mousse résiliente, se situant entre l'unité d'écran et le cadre de montage.

12. Ensemble selon la revendication 11, dans lequel la couche de matériau en mousse est fixée par un adhésif au cadre de montage et par un adhésif à l'unité d'écran.

13. Ensemble selon la revendication 11, dans lequel le rebord du cadre de montage et les languettes résilientes sont configurés les uns par rapport aux autres de telle sorte que ;
[2] (a) avant que l'unité d'écran ne soit fixée au cadre de montage:
[3] - l'unité d'écran peut être placée avec les languettes résilientes de celle-ci reposant sur le rebord du cadre de montage ;
[4] - avec l'unité d'écran ainsi empêchée d'entrer en contact avec l'adhésif de fixation par lequel l'unité d'écran est fixée au cadre de montage ; et
[5] (b) l'unité d'écran peut être appuyée sur celles-ci, en contact avec l'adhésif de fixation.

14. Ensemble selon la revendication 7, dans lequel, en ce qui concerne au moins l'une des languettes résilientes, le rebord du cadre de montage comprend une douille, qui est d'une largeur telle qu'elle est en ajustement serré sur la largeur de la languette.

15. Ensemble selon la revendication 7, dans lequel le cadre de montage repose fixé de façon rigide dans un boîtier d'un dispositif électronique portatif.
